(19) **Europäisches Patentamt**

**European Patent Office**

**Office européen des brevets**

(11) Veröffentlichungsnummer : **0 374 898 B1**

(12) **EUROPÄISCHE PATENTSCHRIFT**

(45) Veröffentlichungstag der Patentschrift :
**19.11.92 Patentblatt 92/47**

(51) Int. Cl.⁵ : **A01G 9/02**

(21) Anmeldenummer : **89123586.3**

(22) Anmeldetag : **20.12.89**

(54) **Pflanztafel.**

(30) Priorität : **21.12.88 DE 8815857 U**

(43) Veröffentlichungstag der Anmeldung :
**27.06.90 Patentblatt 90/26**

(45) Bekanntmachung des Hinweises auf die
Patenterteilung :
**19.11.92 Patentblatt 92/47**

(84) Benannte Vertragsstaaten :
**BE DE FR GB NL**

(56) Entgegenhaltungen :
**EP-A- 0 080 252**
**DE-A- 3 415 911**
**DE-U- 8 505 654**
**FR-A- 2 255 842**
**FR-A- 2 511 067**
**US-A- 4 295 296**

(73) Patentinhaber : **VIVARIA GMBH IMPORT VON PFLANZEN UND TIEREN**
**Wallensteinstrasse 10**
**W-8193 Geretsried (DE)**

(72) Erfinder : **Koerper, Hans**
**Seniweg 15**
**W-8192 Geretsried 2 (DE)**

(74) Vertreter : **Patentanwälte Grünecker,**
**Kinkeldey, Stockmair & Partner**
**Maximilianstrasse 58**
**W-8000 München 22 (DE)**

**Beschreibung**

Die Erfindung bezieht sich auf eine Pflanztafel der im Oberbegriff von Anspruch 1 erläuterten Art.

Für besondere Wuchsformen, bei Platzmangel oder bei Präsentation über Augenhöhe ist es zweckmäßiger, wenn Epiphyten, insbesondere epiphytische Orchideen, nicht in den, beispielsweise aus dem DE-U-85 05 654 bekannte Epiphytenkörben gepflanzt werden, in die sie von oben hineingesetzt werden müssen, sondern auf eine geeignete, senkrechte Unterlage aufgebunden werden, die dann aufgehängt wird. Zu diesem Zweck wurden bislang Epiphyten auf Pflanztafeln aus Baumfarnwurzeln aufgebunden. Diese Pflanztafeln bestanden aus einem quaderförmig zurechtgeschnittenen Baumfarn-Wurzelgeflecht, das ohne weitere Umhüllung direkt mit einem Aufhängehaken versehen war. Dieses Baumfarnwurzelgeflecht soll jedoch zum Schutz der Bestände nicht mehr als Pflanzsubstrat verwendet werden. Andere Pflanzsubstrate, wie beispielsweise Kunststoff-Flocken oder -Borsten, eignen sich jedoch nicht für die Verwendung als Pflanztafel. Ein weiterer gravierender Nachteil der bekannten Pflanztafeln aus Baumfarn-Wurzelgeflecht liegt darin, daß von ihnen eine festgewurzelte Pflanze kaum mehr ohne Beschädigung abgenommen werden kann, wenn beispielsweise die Bepflanzung geteilt oder in frisches Substrat umgepflanzt werden muß. Bei den hohen Preisen, die insbesondere für seltene Orchideen gezahlt werden müssen, hat man deshalb bisher von einer Pflanzung dieser Orchideen auf Pflanztafeln Abstand genommen, obwohl eine derartige Anordnung ihrem natürlichen Wuchscharakter entsprechen würde.

Der Erfindung liegt somit die Aufgabe zugrunde, eine Pflanztafel zu schaffen, die mit allen handelsüblichen, lockeren Pflanzsubstraten zu verwenden ist und ein wurzelschonendes Be- und Umpflanzen erlaubt.

Die Aufgabe wird durch die kennzeichnenden Merkmale des Hauptanspruches gelöst.

Durch die erfindungsgemäße Ausgestaltung kann auch relativ loses Pflanzsubstrat, wie beispielsweise Kunststoff-Flocken, Sphagnum oder dergleichen, für eine senkrechte Bepflanzung eingesetzt werden. Da bei der erfindungsgemäßen Pflanztafel die Pflanzen ausschließlich am lösbaren Element befestigt werden, kann äußerst lockeres, gegebenenfalls stark porenhaltiges oder eine hohe Kapilarwirkung aufweisendes Pflanzsubstrat verwendet werden, das sowohl eine optimale Belüftung als auch eine notwendige Luftfeuchtigkeit bzw. eine ausreichende Wasserversorgung der Pflanzen gewährleistet. Das Pflanzsubstrat der erfindungsgemäßen Pflanztafel muß somit noch nicht einmal diejenige Befestigungsfunktion erfüllen, die bei einer Pflanzung in Epiphytenkörben, die Pflanze aufrecht hält. Das Bepflanzen kann wurzelschonend dadurch erfolgen, daß die lösbaren Elemente nacheinander zur Vorderwand zusammengesetzt werden, wobei nach dem Einsetzen eines jeweils neuen Elementes die Wurzeln durch die Öffnungen gezogen, auf dem Substrat ausgebreitet und mit neuem Substrat bedeckt werden, bevor das nächste lösbare Element befestigt wird. Durch die dem Inneren des Behälters anliegende, glatte Oberfläche können sich die Wurzeln an der den Öffnungen gegenüberliegenden Rückwand nicht festkrallen, so daß bei einer Demontage der lösbaren Elemente der Vorderwand jede an einem der Elemente befestigte Pflanze von der Pflanztafel abgenommen werden kann. Gleichzeitig kann das Substrat auch aus dem Behälter ausgeschüttet und durch frisches Substrat ersetzt werden.

Zwar ist ein Pflanzgefäß mit aus lösbaren Elementen bestehenden Wänden aus der FR-A-2 255 842 bereits bekannt. Dieses bekannte Pflanzgefäß dient jedoch einer Senkrechtkultur von Gemüse, Erdbeeren oder dergleichen. In einem Ausführungsbeispiel besteht das Pflanzgefäß aus einem Rahmen, in den rechteckige Einschubplatten eingeschoben werden. Die Einschubplatten sind an einander gegenüberliegenden Rändern mit halbkreisförmigen, miteinander fluchtenden Ausnehmungen versehen, die beim Aufeinandertreffen der Einschubplatten kreisrunde Löcher für die Bepflanzung bilden. Die Pflanzen werden erst nach dem Zusammensetzen des Behälters und dem Einfüllen der Erde durch die kreisrunden Löcher gesteckt und mit Hilfe eines Pflanzholzes mit ihren Wurzeln in der Erde festgedrückt. Die Übertragung dieser Konstruktion auf Pflanztafeln für Epiphyten würde somit keinen Vorteil gegenüber den bekannten Pflanztafeln aus Baumfarn-Wurzelgeflecht erbringen, da sich auch bei dem bekannten Pflanzgefäß die Wurzeln im Substrat und an der Innenseite des Behälters verankern müssen, damit die Pflanzen bei einer Senkrechtkultur nicht aus den Öffnungen herausfallen.

Eine besonders einfache Konstruktion der erfindungsgemäßen Pflanztafel ergibt sich durch die Verwendung von Einschubplatten als lösbare Elemente, gemäß Anspruch 2 für die Vorderwand, gemäß Anspruch 3 für einen Boden und gemäß Anspruch 4 für eine obere Abschlußwand, wobei die obere Abschlußwand gegebenenfalls weggelassen werden kann, wenn eine stärkere Befeuchtung gewünscht ist.

Werden für die Vorderwand, dem Boden und gegebenenfalls die obere Abschlußwand gemäß Anspruch 5 identisch ausgebildete Einschubplatten verwendet, so wird die Montage der Pflanztafel weiter erleichtert, da nicht auf die richtige Reihenfolge der Einschubplatten geachtet werden muß. Die Maßnahmen gemäß den Ansprüchen 6 und 7 stellen auf einfache Weise sicher, daß die Pflanztafel nicht unbeabsichtigt demontiert werden kann.

Die größtmögliche Fläche der zwischen den Einschubplatten vorgesehenen Öffnungen wird gemäß Anspruch 9 dadurch erzielt, daß die Abstandshalter in die Führungsnuten versenkt werden.

Anspruch 9 beschreibt eine besonders bevorzugte Ausgestaltung der Befestigungseinrichtung, die sicherstellt, daß sich weder Substrat noch Wurzeln mit dem Bindematerial verklammern können.

Wird gemäß Anspruch 10 die Rückwand aus durchsichtigem Material gefertigt, so kann die Durchwurzelung, der Zustand der Wurzeln sowie der Zustand des Substrates auf einfache Weise überwacht werden.

Im Gegensatz zu den nach innen weisenden Oberfläche der Rückwand können die nach außen weisenden Oberflächen der Einschubplatten mit der in Anspruch 11 beschriebenen Strukturierung, beispielsweise einer Kannellierung, einer Narbung, einer Riffelung oder dergleichen, versehen sein, die einerseits störende Lichtreflexe verhindert und die Pflanztafel somit unauffälliger werden läßt, und die andererseits den Wurzeln etwas Halt gibt, die sich auf der nach außen weisenden Oberfläche der Elemente durchaus festkrallen können, da sie ja zusammen mit den Elementen umgepflanzt werden.

Ein Ausführungsbeispiel der Erfindung wird nachfolgend anhand der Zeichnungen näher erläutert. Es zeigen:

Fig. 1 eine perspektivische Darstellung der erfindungsgemäßen Pflanztafel,

Fig. 2 den Schnitt II-II aus Fig. 1, mit abgenommener Vorderwand, Abdeckwand und Boden,

Fig. 3 die rückwärtige Ansicht einer Einschubplatte,

Fig. 4 die Seitenansicht der Einschubplatte,

Fig. 5 den Schnitt V-V aus Fig. 3,

Fig. 6 die herausvergrößerte Einzelheit A aus Fig. 1 mit abgenommener Seitenwand, und

Fig. 7 die herausvergrößerte Einzelheit B aus Fig. 1 mit abgenommener Seitenwand.

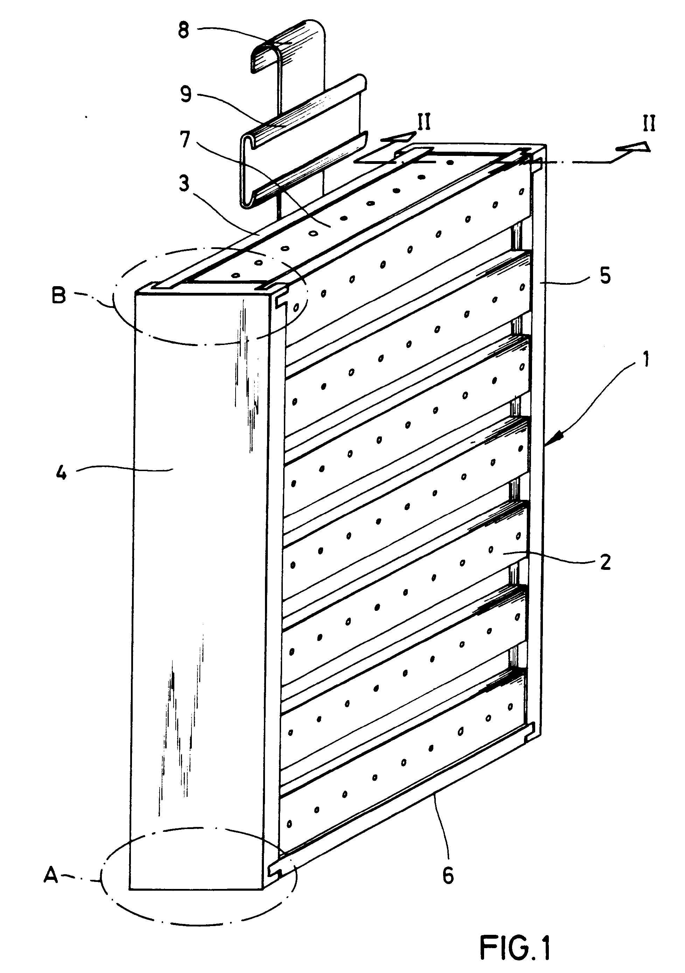

Aus Fig. 1 ist ein Behälter 1 ersichtlich, der mit Pflanzsubstrat gefüllt eine Pflanztafel für senkrechte Bepflanzung mit Epiphyten (nicht gezeichnet) bildet. Der Behälter 1 hat die Form eines auf seiner Schmalseite stehenden, flachen Quaders und weist eine Vorderwand 2, eine Rückwand 3, zwei schmale, senkrechte Seitenwände 4 und 5, einen Boden 6 und eine obere Abschlußwand 7 auf. Alle Wände sind aus Kunststoff und weisen eins in das Innere des Behälters 1 gerichtete glatte Oberfläche auf, an der die Wurzeln der Epiphyten nicht haften, was insbesondere für die Rückwand 3 wichtig ist, da diese im wesentlichen in Wuchsrichtung der Wurzeln liegt. Die Rückwand 3 besteht aus einem durchsichtigen Material, insbesondere einem glasklaren Kunststoff. An der Rückwand 3 ist ein Haken 8 in Form eines gebogenen Blechstreifens zum Aufhängen des Behälters 1 befestigt. Der Haken 8 trägt eine Einschubführung 9 in Form eines Blechstreifens mit übergebogenen Rändern zum Einschieben von Namensschildern.

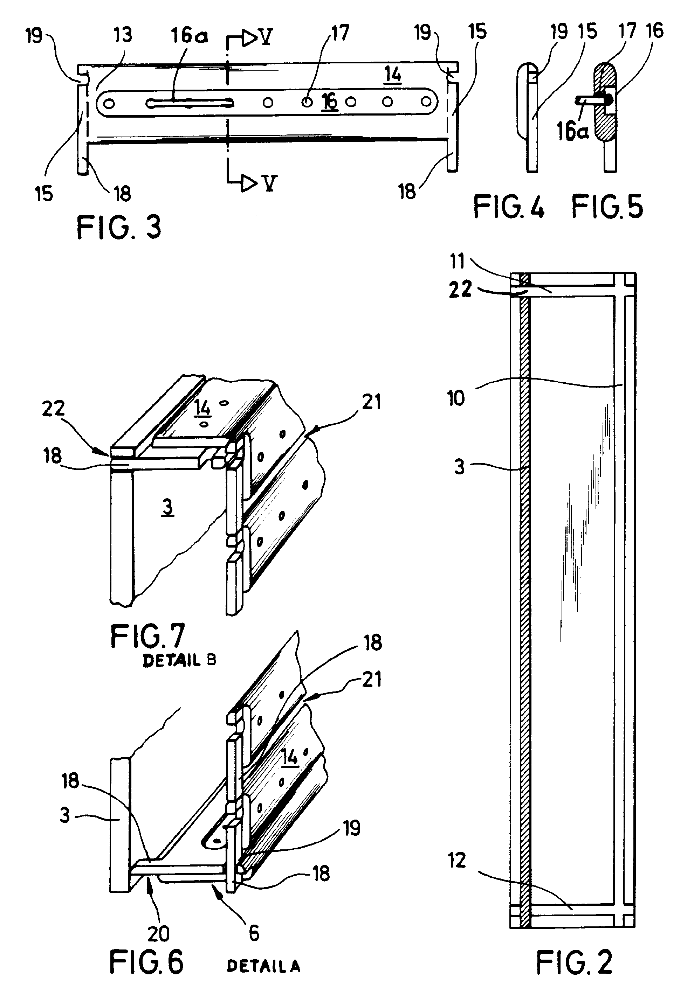

Die Seitenwände 4 und 5 sind, wie in Fig. 2 ersichtlich, mit durchgehenden Führungsnuten versehen, die in den Seitenwänden 4 und 5 mit gleichen Abmessungen, jedoch spiegelbildlicher Anordnung vorgesehen sind. An der der Rückwand 3 abgewandten senkrechten Längskante ist eine senkrechte Führungsnut 10 eingearbeitet. Das obere und das untere Ende der Seitenwände 4, 5 trägt jeweils eine waagerechte Führungsnut 11, 12. Alle Führungsnuten 10, 11 und 12 haben die gleiche Breite, die gleiche Tiefe und den gleichen Abstand zu der jeweils anliegenden, parallelen Kante der Seitenwand 4 bzw. 5. Zweckmäßigerweise ist zur Aufnahme der Rückwand eine weitere, nicht sichtbare Führungsnut vorgesehen, in die die Rückwand eingeklebt wird. Als fest miteinander verbundene Bauteile enthält somit der Behälter 1 lediglich die Rückwand 3 mit dem Haken 8 und die beiden senkrechten Seitenwände 4 und 5.

Die Vorderwand 2, der Boden 6 und die obere Abschlußwand 7 werden durch eine Mehrzahl identischer als lösbare Elemente ausgebildeter Einschubplatten 13 gebildet, von denen eine in Fig. 3 näher dargestellt ist. Die Einschubplatte 13 besteht aus einem leistenförmigen Grundkörper 14, dessen beide Schmalseiten mit längsverlaufenden Gleitstegen 15 versehen sind. Die später dem Pflanzsubstrat zugewandte rückwärtige Fläche des Grundkörpers 14 ist mit einer Rinne 16 versehen, die über Öffnungen 17 mit der Außenseite in Verbindung steht. In der Rinne 16 wird ein Bindematerial, z. B. ein Bindedraht 16a versenkt, dessen Enden durch die Öffnungen 17 gesteckt werden, so daß auf der Vorderseite die nicht gezeichnete Bepflanzung befestigt werden kann. Die Rinne 16 kann sich im wesentlichen über die gesamte Länge des Grundkörpers 14 erstrecken und eine einzige Reihe von waagerecht angeordneten Öffnungen aufnehmen. Andere Anordnungen, beispielsweise eine Mehrzahl Rinnen, die jeweils zwei übereinanderliegende Bohrungen verbinden, sind ebenfalls denkbar. Die nicht mit den Gleitstegen 15 versehenen Kanten des Grundkörpers 14 sind abgerundet, um eine Beschädigung der Wurzeln zu vermeiden.

Wie insbesondere Fig. 4 zeigt, sind die Gleitstege 15 schmaler als der Grundkörper 14 und von der im fertigen Behälter 1 nach außen weisenden Oberfläche des Grundkörpers 14 um einen Betrag zurückversetzt, der dem Abstand der Führungsnuten 10, 11, 12 von der jeweils benachbarten, parallelen Kante der jeweiligen Seitenwand 4, 5 entspricht. Auf diese Weise schließt die nach außen weisende Oberfläche des Grundkörpers 14 bündig sowohl mit den Seitenwänden als auch mit der Rückwand ab, so daß keine Kanten verbleiben, an denen sich verrottendes Material festsetzen kann. Jeder der beiden Gleitstege 15 ist an der gleichen Seite des Grundkörpers 14 über diesen hinaus durch einen Abschnitt 18 verlängert, der als Abstandshalter dient. Die Länge der Abstandshalter 18 entspricht im wesentlichen der Breite des Grundkörpers 14 senkrecht zur Zeichnungsebene in Fig. 3. An dem dem Abstandshalter 18 abgewandten Ende jedes Gleitsteges ist eine Ausnehmung 19 vorgesehen, deren Breite und Tiefe den Abmessungen des Abstandshalters 18 entspricht. Der Abstand der Ausnehmungen 19 vom anliegenden Ende des Gleitsteges 15 entspricht dem Abstand des Gleitsteges 15 von der nach außen weisenden Oberfläche des Grundkörpers 14. Die Breite der Einschubplatten 13 in Richtung der Längserstreckung von Gleitstegen 15 und Abstandshaltern 18 entspricht der über die Rückwand 3 überstehenden Breite der Seitenwände 4 bzw. 5.

Der Behälter 1 wird wie folgt zu einer Pflanztafel zusammengesetzt. Zunächst wird für den Boden 6 eine der Einschubplatten 13, mit den Abstandshaltern 18 voraus, derart in die unteren waagerechten Führungsnuten 12 beider Seitenwände 4 und 5 eingeschoben, daß die Rinne 16 nach oben zeigt. Stoßen die Abstandshalter 18, wie Fig. 6 zeigt, an der Rückwand 3 an, so verbleibt zwischen dem Grundkörper 14 und der Rückwand eine Drainageöffnung 20. Die vordere Kante der den Boden 6 bildenden Einschubplatte 13 fluchtet mit den vorderen Kanten der Seitenwände 4 und 5. Jede der Ausnehmungen 19 befindet sich im Kreuzungsbereich zwischen den senkrechten Führungsnuten 10 und den unteren, waagerechten Führungsnuten 12. Zum Aufbau der Vorderwand 2 wird anschließend die erste die Vorderwand bildende Einschubplatte 3 von oben her in die senkrechten Führungsnuten 10 eingeschoben, wiederum mit den Abstandshaltern 18 voran. Im Kreuzungsbereich der Führungsnuten 10 und 12 durchdringen die Abstandshalter 18 der ersten die Vorderwand 2 bildenden Einschubplatte 13 die Ausnehmungen 19 der den Boden 6 bildenden Einschubplatte 13. Durch die erwähnten Abmessungen schließen die Abstandshalter 18 mit der nach außen weisenden Oberfläche der den Boden 6 bildenden Einschubplatte 13 bündig ab, während die Unterkante des Grundkörpers 14 auf dem Boden 6 aufsteht (s. Fig. 6). Die den Boden 6 bildende Einschubplatte und die unterste der die Vorderwand 2 bildenden Einschubplatten sind somit gegeneinander verriegelt, so daß weder die Boden-Einschubplatte nach vorn aus den Führungsnuten 12 noch die Vorderwand-Einschubplatte nach unten aus der Führungsnuten 10 gleiten kann. Danach wird von oben in die Führungsnuten 10 eine weitere Einschubplatte eingesteckt und nach unten geschoben, bis die Abstandshalter 18 auf der Oberkante der ersten die Vorderwand 2 bildenden Einschubplatte 13 aufstehen. Dadurch bildet sich zwischen den Einschubplatten eine Öffnung 21, die den Zugang zum Pflanzsubstrat im Inneren des Behälters 1 ermöglicht. Danach wird eine zum Schließen der Vorderwand 2 benötigte Anzahl von Einschubplatten 13 in bereits beschriebener Weise eingesteckt. Jede oder nur ausgewählte Einschubplatten 13 werden vor dem Einschieben mit Bindedraht versehen, dessen Enden durch die Öffnungen 17 nach außen gezogen und zum Festbinden der Bepflanzung verwendet. Darüber hinaus kann die Bepflanzung fortlaufend erfolgen, so daß an jeder Einschubplatte 13 die vorgesehene Pflanze befestigt und die Einschubplatte dann eingeschoben wird. Die Wurzeln werden durch die Öffnungen 21 in das Innere des Behälters 1 geleitet und Pflanzsubstrat aufgefüllt. Erst dann wird eine neue, bepflanzte oder nicht bepflanzte Einschubplatte nachgeschoben und gegebenenfalls wiederum Pflanzsubstrat aufgefüllt. Bevor die oberste der die Vorderwand 2 bildenden Einschubplatten in die Führungsnuten 10 gesteckt wird, muß die obere Abschlußwand 7 befestigt werden, falls nicht zur Erhöhung der Befeuchtung auf sie verzichtet wird. Auch für die obere Abschlußwand 7 wird eine der Einschubplatten 13 verwendet, die mit nach unten weisender Rinne 16 in die oberen, waagerechten Führungsnuten 11 der Seitenwände 4 und 5, Abstandshalter voran, eingeschoben werden. In der Rückwand 3 sind im Auftreffbereich der Abstandshalter 18 Öffnungen 22 vorgesehen (Fig. 2 und 7), die die Abstandshalter 18 vollständig aufnehmen, so daß der Grundkörper 14 an der Rückwand 3 anstößt. Die den Abstandshaltern abgewandte Kante des Grundkörpers 14 ist somit um die Breite des Grundkörpers 14 von den Vorderkanten der Seitenwände 4 bzw. 5 zurückversetzt, so daß diese an der rückwärtigen Oberfläche der letzten die Vorderwand 2 bildenden Einschubplatte anschlägt und durch diese Einschubplatte gegen ein Herausgleiten aus den Führungsnuten 11 gesichert ist.

In Abwandlung des beschriebenen und gezeichneten Ausführungsbeispieles können statt der Einschubplatten andere lösbare Elemente, entweder lediglich für die Vorderwand oder für Vorderwand, Boden und gegebenenfalls obere Abschlußwand, verwendet werden. Geeignet wären beispielsweise scharnierartig angelenkte oder einrastbare bzw. aufklemmbare Platten. Weiterhin ist es möglich, den Boden und gegebenenfalls auch den unteren Bereich der Vorderwand fest mit den Seitenwänden und/oder der Rückwand zu verbinden. Anstelle der Gleitstege können auch die Randbereiche der Einschubplatten in den Führungsnuten aufgenommen werden. Die Abstandshalter müssen nicht unbedingt angeformt sondern können auch gesondert zwischen die Einschubplatten eingelegt werden. Schließlich kann die nach außen weisende Oberfläche der Vorderwand, gewellt oder anderweitig strukturiert bzw. aufgerauht sein, um das Erscheidungsbild störende Reflexionen zu vermeiden und es den Wurzeln zu ermöglichen, auch an dieser Oberfläche Halt zu finden. Für diesen Zweck hat sich eine senkrechte Kannelierung von 0,5 bis max. 1 mm als vorteilhaft erwiesen.

## Patentansprüche

1. Pflanztafel für eine senkrechte Bepflanzung mit Epiphyten in Pflanzsubstrat, **gekennzeichnet durch** einen Behälter (1) für das Pflanzsubstrat, der eine mit einer dem Pflanzsubstrat zugewandten, glatten Innenoberfläche versehene Rückwand (3) und eine Vorderwand (2) aufweist, die eine Mehrzahl lösbarer, mit einer Befestigungseinrichtung (16, 16a, 17) zum Befestigen der Bepflanzung versehenen Elemente (13) und mindestens eine einen Zugang der Bepflanzung zum Pflanzsubstrat ermöglichende Öffnung (21) enthält, die durch zwischen den Elementen (13) angeordneten Abstandshaltern (18) gebildet ist.

2. Pflanztafel nach Anspruch 1, **dadurch gekennzeichnet,** daß das lösbare Element eine Einschubplatte (13) ist, die in Führungsnuten (10) geführt und gehalten ist, die in einander gegenüberliegenden Seitenwänden (4, 5) des Behälters (1) vorgesehen sind.

3. Pflanztafel nach Anspruch 2, **dadurch gekennzeichnet,** daß ein Boden (6) des Behälters (1) durch eine Einschubplatte (13) gebildet ist, die in am unteren Ende gegenüberliegender Seitenwände (4, 5) des Behälters (1) ausgebildete, waagerechte Führungsnuten (12) geführt und gehalten ist.

4. Pflanztafel nach Anspruch 2 oder 3, **dadurch gekennzeichnet,** daß eine obere Abschlußwand (7) des Behälters (1) durch eine Einschubplatte (13) gebildet ist, die in am oberen Ende gegenüberliegender Seitenwände (4, 5) des Behälters (1) ausgebildete, waagerechte Führungsnuten (11) geführt und gehalten ist.

5. Pflanztafel nach einem der Ansprüche 2 bis 4, **dadurch gekennzeichnet,** daß die die Vorderwand (2), den Boden (6) und die obere Abschlußwand (7) bildenden Einschubplatten (13) identisch ausgebildet sind.

6. Pflanztafel nach einem der Ansprüche 3 bis 5, **dadurch gekennzeichnet,** daß der Boden (6) und die Vorderwand (2) durch eine Verriegelungseinrichtung (18, 19) gegeneinander verriegelt sind, wobei die Verriegelungseinrichtung durch in Ausnehmungen (19) in der den Boden (6) bildenden Einschubplatte (13) eingreifender Abstandshalter (18) der den Boden (6) anliegenden, unteren Einschubplatte der Vorderwand (2) gebildet ist.

7. Pflanztafel nach einem der Ansprüche 4 bis 6, **dadurch gekennzeichnet,** daß die die obere Abschlußwand (7) bildende Einschubplatte (13) durch ihre Anlage an der oberen Einschubplatte (13) der Vorderwand (12) in ihrer Lage verriegelt ist.

8. Pflanztafel nach einem der Ansprüche 2 bis 7, **dadurch gekennzeichnet,** daß die Abstandshalter (18) in den Führungsnuten (10, 11, 12) geführt sind.

9. Pflanztafel nach einem der Ansprüche 1 bis 8, **dadurch gekennzeichnet,** daß die Befestigungseinrichtung eine auf der dem Pflanzsubstrat zugewandten Rückseite des lösbaren Elementes (13) angeordnete Rinne (16) zum Aufnehmen von Bindematerial (16a) für die Bepflanzung aufweist, die mit der Vorderseite des Elements (13) über Öffnungen (17) zum Durchstecken des Bindematerials (16a) verbunden ist.

10. Pflanztafel nach einem der Ansprüche 1 bis 9, **dadurch gekennzeichnet,** daß die Rückwand (3) des Behälters (1) aus durchsichtigem Material besteht.

11. Pflanztafel nach einem der Ansprüche 1 bis 10, **dadurch gekennzeichnet,** daß die nach außen weisende Oberfläche der lösbaren Elemente (13) strukturiert ist.

## Claims

1. Planting panel for vertical planting with epiphytes in a planting substrate, characterised by a container (1) for the planting substrate, which comprises a rear wall (3) provided with a smooth inner surface facing towards the planting substrate and a front wall (2) which contains a plurality of releasable elements (13) provided with a fastening device (16, 16a, 17) for fastening the planted material and at least one opening (21) which allows access of the planted material to the planting substrate and which is formed by spacers (18) arranged between the elements (13).

2. Planting panel according to claim 1, characterised in that the releasable element is a slide-in plate (13) which is guided and held in guide grooves (10) which are provided in opposed side walls (4, 5) of the container (1).

3. Planting panel according to claim 2, characterised in that a bottom (6) of the container (1) is formed by a slide-in plate (13) which is guided and held in horizontal guide grooves (12) formed at the lower end of opposed side walls (4, 5) of the container (1).

4. Planting panel according to claim 2 or 3, characterised in that an upper end wall (7) of the container (1) is formed by a slide-in plate (13) which is guided and held in horizontal guide grooves (11) formed at the upper end of opposed side walls (4, 5) of the container (1).

5. Planting panel according to any of claims 2 to 4, characterised in that the slide-in plates (13) forming the front wall (2), the bottom (6) and the upper end wall (7) are of identical construction.

6. Planting panel according to any of claims 3 to 5, characterised in that the bottom (6) and the front wall (2) are locked relative to each other by a locking device (18, 19), wherein the locking device is formed by spacers (18) of the lower slide-in plate of the front wall (2) which lies adjacent to the bottom (6), which spacers engage in recesses (19) in the slide-in plate (13) forming the bottom (6).

7. Planting panel according to any of claims 4 to 6, characterised in that the slide-in plate (13) forming the upper end wall (7) is locked in position by abutment against the upper slide-in plate (13) of the front wall (12).

8. Planting panel according to any of claims 2 to 7, characterised in that the spacers (18) are guided in the guide grooves (10, 11, 12).

9. Planting panel according to any of claims 1 to 8, characterised in that the fastening device comprises a channel (16) arranged on the rear side of the releasable element (13) facing towards the planting substrate, for receiving binding material (16a) for the planted material, which is connected to the front side of the element (13) via openings (17) for passing the binding material (16a) through.

10. Planting panel according to any of claims 1 to 9, characterised in that the rear wall (3) of the container (1) is made of transparent material.

11. Planting panel according to any of claims 1 to 10, characterised in that the outwardly facing surface of the releasable elements (13) is structured.

**Revendications**

1. Table à planter destinée à recevoir une plantation, verticale d'épiphytes dans un substrat de culture, caractérisée par la présence d'un récipient (1) pour ledit substrat qui présente une paroi arrière pourvue d'une surface intérieure lisse orientée vers le substrat et une paroi avant (2) qui contient une pluralité d'éléments (13) amovibles munis d'un dispositif de fixation (16, 16a, 17) pour la fixation de la plantation et au moins une ouverture (21) permettant à la plantation d'accéder au substrat, cette ouverture étant formée par des pièces d'écartement (18) disposées entre les éléments (13).

2. Table à planter selon la revendication 1, caractérisée par le fait que l'élément amovible est une plaque-tiroir (13) qui est guidée et maintenue dans des rainures de guidage (10) lesquelles sont prévues dans les parois latérales (4, 5) se faisant face mutuellement du récipient (1).

3. Table à planter selon la revendication 2, caractérisée par le fait qu'un fond (6) du récipient est formé par une plaque-tiroir (13) qui est guidée et maintenue dans des rainures de guidage (12) horizontales formées sur l'extrémité inférieure de parois latérales (4, 5) se faisant face du récipient (1).

4. Table à planter selon la revendication 2 ou 3, caractérisée par le fait qu'une paroi de recouvrement supérieure (7) du récipient (1) est formée par une plaque-tiroir (13) qui est guidée et maintenue dans des rainures de guidage (11) horizontales configurées sur l'extrémité supérieure des parois latérales (4, 5) se faisant face du récipient (1).

5. Table à planter selon l'une des revendications 2 à 4, caractérisée par le fait que les plaques-tiroirs (13) formant la paroi avant (2), le fond (6) et la paroi de recouvrement supérieure (7) sont réalisées de manière identique.

6. Table à planter selon les revendications 3 à 5, caractérisée par le fait que le fond (6) et la paroi avant (2) sont verrouillées par rapport à l'autre par un dispositif de verrouillage (18, 19), ledit dispositif de verrouillage étant formé par des pièces d'écartement (18) de la plaque-tiroir inférieure de la paroi avant (2) s'appliquant contre le fond (6) qui pénètrent dans des encoches (18) pratiquées dans la plaque-tiroir (13) formant ledit fond (6).

7. Table à planter selon l'une des revendications 4 à 6, caractérisée par le fait que la plaque-tiroir (13) formant la paroi de fermeture supérieure (7) est verrouillée dans sa position par son application contre la plaque-tiroir supérieure (13) de la paroi avant (12).

8. Table à planter selon l'une des revendications 2 à 7, caractérisée par le fait que les pièces d'écartement (18) sont guidées dans les rainures de guidage (10, 11, 12).

9. Table à planter selon l'une des revendications 1 à 8, caractérisée par le fait que le dispositif de fixation présente une gorge (16) disposée sur la face arrière orientée vers le substrat de l'élément amovible (13) et destinée à recevoir un matériel de liage (16a) pour la plantation, ladite gorge étant reliée à la face avant de l'élément (13) par des ouvertures (17) par lesquelles est introduit le matériel de liage (16a).

10. Table à planter selon l'une des revendications 1 à 9, caractérisée par le fait que la paroi arrière (3) du récipient (1) est constituée en une matière transparente.

11. Table à planter selon l'une des revendications 1 à 10, caractérisée par le fait que la surface orientée vers l'extérieur des éléments amovibles (13) est structurée.

**FIG.1**

FIG. 3

FIG. 4   FIG. 5

FIG.7
DETAIL B

FIG.6   DETAIL A

FIG. 2